(19) Europäisches Patentamt
European Patent Office
Office européen des brevets

(11) Publication number: **0 192 987 B1**

(12) **EUROPEAN PATENT SPECIFICATION**

(45) Date of publication of patent specification: **22.04.92**

(51) Int. Cl.5: **C08F 2/44**, C08F 10/00, C08F 4/64

(21) Application number: **86101203.7**

(22) Date of filing: **30.01.86**

The file contains technical information submitted after the application was filed and not included in this specification

# (54) A process for preparing thermically stable olefinic polymers.

(30) Priority: **30.01.85 IT 1930785**

(43) Date of publication of application: **03.09.86 Bulletin 86/36**

(45) Publication of the grant of the patent: **22.04.92 Bulletin 92/17**

(84) Designated Contracting States: **AT BE DE FR GB NL**

(56) References cited:
**US-A- 4 304 684**

**RESEARCH DISCLOSURE, no. 112, August 1973, pages 85-91, abstract no. 11252; CIBA-GEIGY AG: "Combinations of stabilisers for polyolefins"**

(73) Proprietor: **Himont Incorporated**
**Three Little Falls Centre 2801 Centerville Road P.O. Box 15439**
**Wilmington Delaware 19850-5439(US)**

(72) Inventor: **Sevini, Franco**
**65, via Aurelio Saffi**
**I-40131 Bologna(IT)**
Inventor: **Noristi, Luciano**
**21, via Beata Lucia Da Narni**
**I-44100 Ferrara(IT)**

(74) Representative: **Zumstein, Fritz, Dr. et al**
**Dr. F. Zumstein Dr. E. Assmann Dipl.-Ing. F. Klingseisen Bräuhausstrasse 4**
**W-8000 München 2(DE)**

EP 0 192 987 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for carrying out the thermal stabilization of olefinic polymers and, in particular, of polypropylene, polyethylene and elastomeric copolymers of propylene with ethylene optionally containing diene monomers, directly in polymerization phase.

Attempts in this way have been made in the past, using the most usual thermal stabilizing agents. According to U.S. patent 3.477.991 alkylphenols are added to the polymerization mixture, carried out by means of $TiCl_3$ and Al-alkyls, to achieve a polymer already thermically stabilized. According to European patent application 3836, the stabilization of polyethylene, produced by means of chromium catalysts, is obtained by addition during polymerization of antioxidizers of phenolic type.

The direct stabilization during polymerization is of particular interest in the case of the recent processes for the production of polyolefines by means of high yield catalysts which can be marketed without granulation, and therefore they cannot be stabilized by means of the usual methods that just foresee a granulation stage.

The use of compounds of phenolic type in the propylene polymerization by means of supported stereospecific catalysts does not lead, however, to satisfactory results as either it has a negative influence on the catalyst performances and causes a yellowing of the polymer or it gives rise to undesired effects on the polymer morphology. The yellowing due to some phenolic compunds occurs also when the product is dried from the slurry at the end of the polymerization.

Now the applicant has found surprisingly that olefinic polymers, for instance polypropylene, polyethylene,and elastomeric copolymers propylene/ethylene/(diene), can be obtained already in the stabilized state, without incurring the typical drawbacks caused by the phenolic compounds by using as stabilizing agents (to be added, either at the start or during or in the final phase of the polymerization, to the polymerization slurry, before the monomer separation), one or more compounds containing in the molecule one or more steric hindered piperidinic groups having the following general formula

(I) 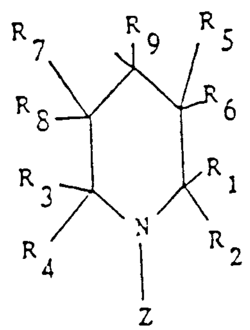

wherein:

| | |
|---|---|
| $R_1$,$R_2$ | may be alkyl radicals containing from 1 to 4 carbon atoms, or rings of 2,2,6,6-tetramethylpiperidine or together they can form with the piperidinic carbon atom they are bound to a cycloalkyl group containing from 5 to 10 carbon atoms. |
| $R_3$,$R_4$ = | alkyl radicals containing from 1 to 18 carbon atoms or together they form with the piperidinic carbon atom they are bound to a cycloalkylic group containing from 5 to 10 carbon atoms, |
| $R_5$.$R_6$,$R_7$,$R_8$,$R_9$,Z = | hydrogen or an organic radical preferably a $C_1$-$C_{18}$ alkyl, $C_3$-$C_{12}$ alkenyl, $C_7$-$C_{18}$ aralkyl radical. |

Compounds containing in the molecule groups having aforesaid formula (I) utilizable for the purpose of the present invention may be represented by the formulas (II) to (XXXI) specified below. They can be:

(A) oligomeric products and/or

(B) monomeric products containing in the molecule one or more piperidinic rings of the general formula (I), optionally substituted and bound to each other.

(II) 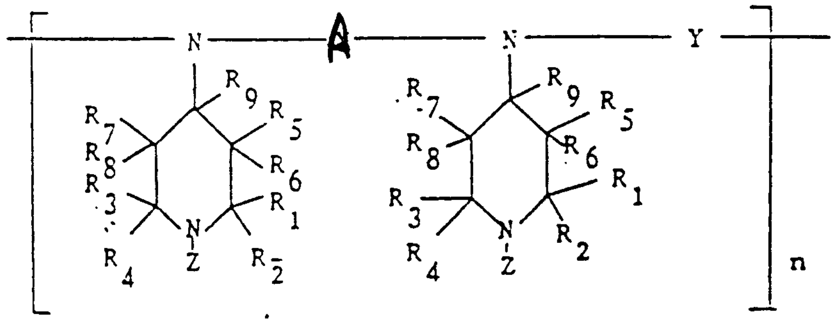

(III) 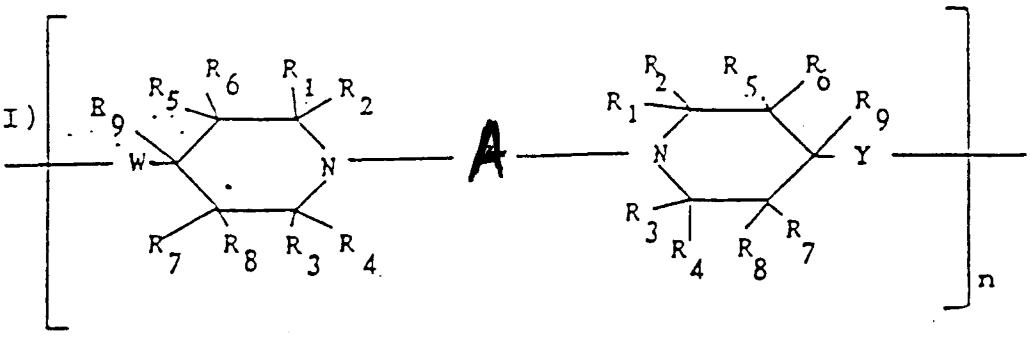

n = a whole number ranging between 2 and 100,
$R_1, R_2, R_3, R_4, Z$ have the meaning as defined for structure (I),
$R_5, R_6, R_7, R_8, R_9$ have the same meaning as in formula (I),
A = a bivalent organic radical, preferably an alkylene radical containing from 1 to 12 carbon atoms or a group containing one or more ester or amidic function,
W = a direct chemical bond or a bivalent organic radical, preferably a $C_1 - C_{12}$ alkylene radical,

$$-\underset{|}{N}-R$$

radical (wherein R = H or a $C_1 - C_{18}$ alkyl radical), or - O -,
Y = a direct chemical bond or a bivalent organic radical of aliphatic, cycloaliphatic, aromatic or heterocyclic type, containing N or O, S, P atoms in the chain or in the heterocyclic ring.

The compounds of formula (II) are known from US-A-4104248,

(IV) 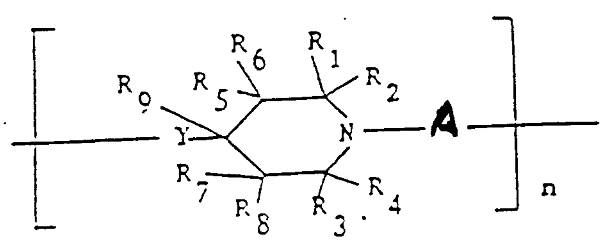

wherein n, A, Y, $R_1$, $R_2$, $R_3$, $R_4$, $R_5$, $R_6$, $R_7$, $R_8$, $R_9$ have the meanings as defined for structures (II) and (III).

(V) 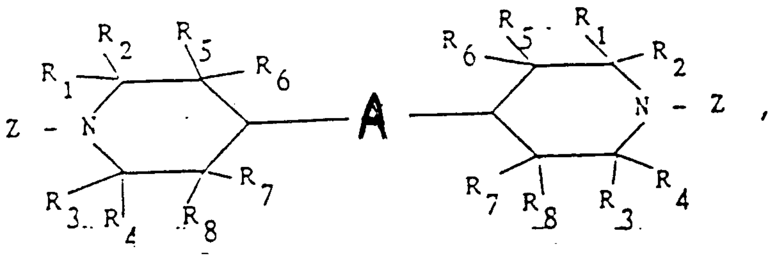

wherein :

Z, $R_1$, $R_2$, $R_3$, $R_4$, $R_5$, $R_6$. $R_7$, $R_8$ have the meaning indicated for structure (I),

A has the same meaning as in formulas (II) and (III).

The compounds of formula (III), (IV) and (V) are known from US-A-4233410.

(VI) 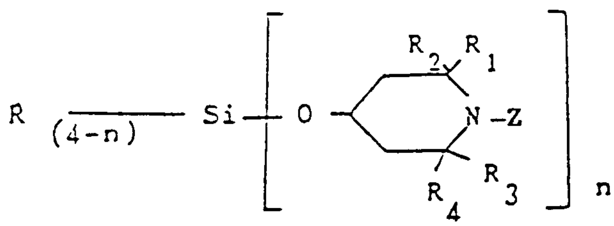

wherein:

$R_1$, $R_2$, $R_3$, $R_4$ have the value assigned for formula (I),

R = an alkyl, alkenyl or phenyl radical,

n = a whole number ranging between 1 and 3, extremes included,

and Z has the same meaning as in formula (I).

The compounds of formula (VI) are known and can be prepared according to what is described in GB-A-1502557.

(VII) 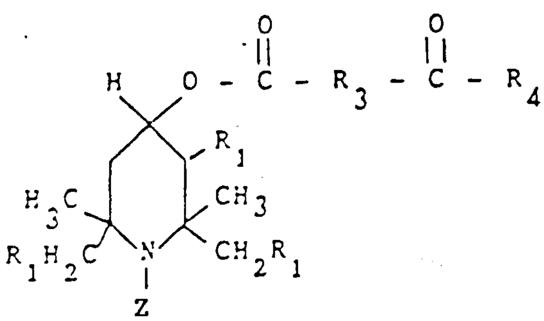

wherein:

$R_1$ = hydrogen or methyl radical

Z = hydrogen or a $C_1$-$C_{12}$ alkyl; $C_3$-$C_8$ alkenyl; $C_7$-$C_{11}$ aralkyl; cyanomethyl or $C_2$-$C_4$ acyl radical

$R_3$ = a $C_1$-$C_{18}$ alkylene; $C_2$-$C_{18}$ oxalkylene, $C_2$-$C_8$ alkenylene radical

$R_4$ = a $C_1$-$C_4$ alkyl radical.

Compounds of this formula are described in US-A-4461898. Among the compounds utilizable for the purpose of the present invention those products are also comprised in whose molecule rings of 1,3,5-triazine and substituted piperidinic rings are contemporaneously present and optionally the products containing in the molecule one or more unsaturated chains of olephinic type as well.

Among them compounds are comprised that may be represented with the following general formulas:

(VIII) 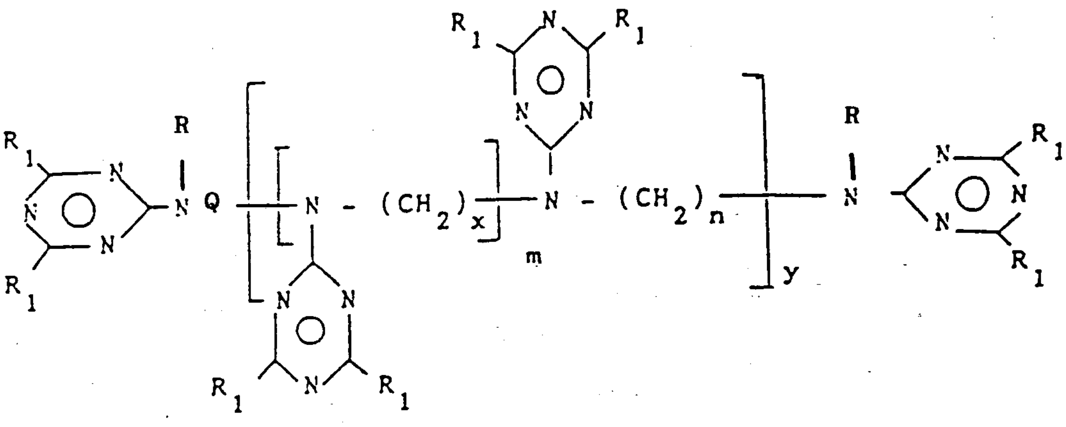

wherein:

Q = a bivalent organic group, for instance an alkylene, phenylene group or group having formula

$$-(CH_2)_3-N(CH_3)-(CH_2)_3-;$$

$R_1$ = a substitued piperidylaminic group

R = H, a $C_1$-$C_{18}$ alkyl radical; or a monovalent organic radical, for instance a substituted piperidinic group.

y = 1 or zero

x,m = 1,2 or 3

n = 2 or 3

Compound of such general formula are described for instance in US-A-4.433.145.

(IX) 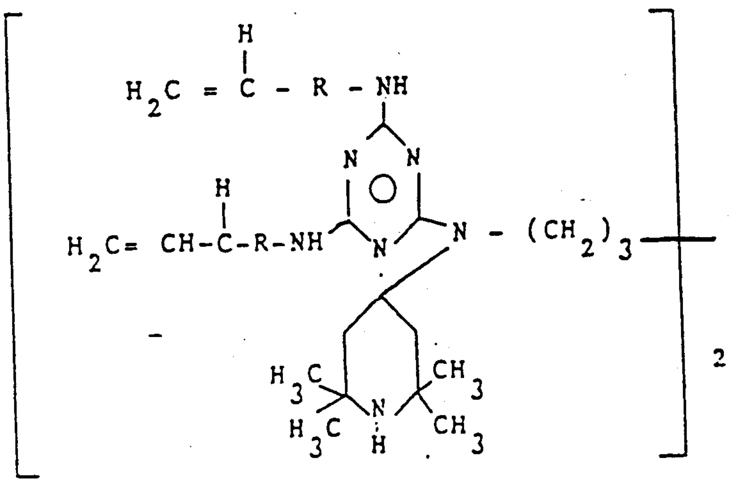

wherein:

R = a $C_1$-$C_8$ alkylene radical.

Compounds of general formula (IX) are described for instance in European patent application No.101.411.

(X) 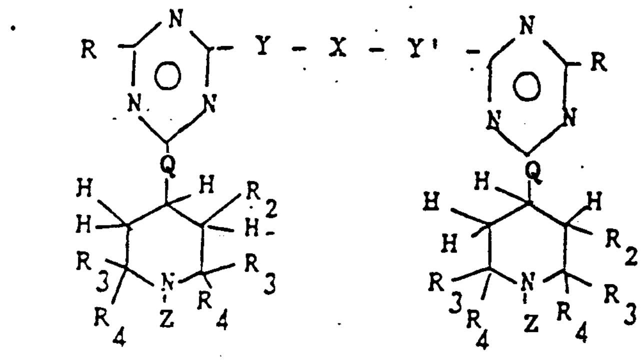

wherein:

R = a $C_3$-$C_6$ oxyalkenyl, or a $C_3$–$C_6$ aminoalkenyl or di-($C_3$-$C_6$ alkelyl) amino group;

$R_2$ = H, a $C_1$-$C_8$ alkyl or benzil radical;

$R_3$, $R_4$, independently, may be a $C_1$-$C_8$ alkyl, benzil or phenyl-ethyl radical; or they form together with the carbon atom they are bound to a $C_5$-$C_{10}$ cycloalkyl group;

Z = H, a $C_2$-$C_3$ hydroxyalkyl, $C_1$-$C_8$ alkyl or hydroxyl radical;

Q = -O-, or

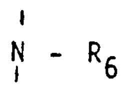

group;

$R_6$ = H, or a $C_1$-$C_{18}$ alkyl or

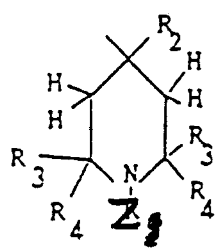

group;

Y and Y' equal or different, may be -O-, or

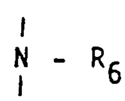

group

X = a $C_2$-$C_{12}$ alkylene radical wherein the alkylenic chain may be interrupted by a Q group, as defined hereinbefore or by a thio group, or X may be a $C_5$-$C_{10}$ cycloalkylenic,or $C_6$-$C_{12}$ arylenic or $C_8$-$C_{14}$ aralkylenic group.

Compounds having formula (X) are described in U.S.patent No. 4435555.

(XI)

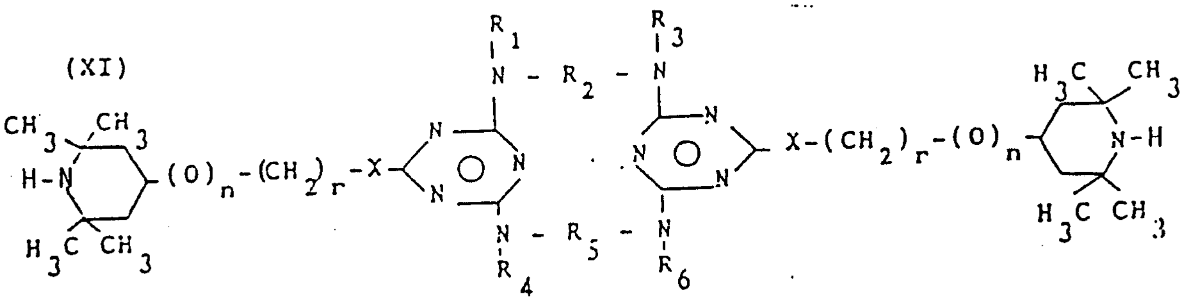

wherein:

$R_1$, $R_3$, $R_4$, $R_6$ equal to or different from each other, may be hydrogen or a $C_1$-$C_{12}$ alkyl; $C_2$-$C_6$ hydroxyalkyl; $C_3$-$C_{12}$ alkenyl ; $C_5$-$C_{12}$ cycloalkenyl; $C_6$-$C_{12}$ substituted or non-substituted aryl; $C_7$-$C_{12}$ substituted or non-substituted aralkyl group; $R_2$, $R_5$ equal or different, may be: a $C_2$-$C_{12}$ alkylene, $C_4$-$C_{12}$ iminodialkylene or oxadialkylene; $C_5$-$C_{12}$ cycloalkelyne; $C_6$-$C_{12}$ arylene; $C_7$-$C_{12}$ aralkylene radical;

X is >O, >S, >N-R7, in which R7 is hydrogen, $C_1$-$C_{18}$-alkyl, $C_3$-$C_{18}$-alkenyl, $C_5$-$C_{18}$-cycloalkyl, substituted or unsubstituted $C_6$-$C_{18}$-aryl, substituted or unsubstituted $C_7$-$C_{18}$-aralkyl, an -$R_8$-Y radical, in which $R_8$ is $C_2$-$C_6$-alkylene and Y is-O-$R_9$ or

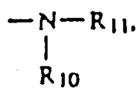

$R_9$ being hydrogen or $C_1$-$C_{18}$-alkyl and $R_{10}$ and $R_{11}$, which may be identical or different, being $C_1$-$C_6$-alkyl,2,2,6,6-tetramethyl-piperid-4-yl or 1,2,2,6,6-pentamethylpirid-4-yl, or $R_7$ is a radical of the formula (II)

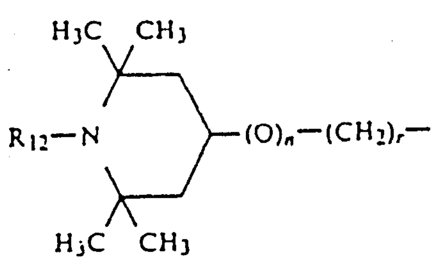

(II)

in which n is zero or 1, r is zero, 1, 2 or 3, $R_{12}$ is hydrogen, $C_1$-$C_{12}$-alkyl, $C_3$-$C_{12}$-alkenyl or -alkynyl, substituted or unsubstituted $C_7$-$C_{12}$-aralkyl, $C_1$-$C_{12}$-acyl, 2,3-epoxypropyl or

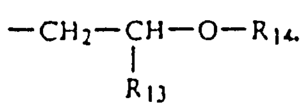

in which $R_{13}$ is hydrogen, methyl, ethyl or phenyl and $R_{14}$ is hydrogen, $C_1$-$C_{12}$-alkyl, $C_3$-$C_{12}$-alkenyl, $C_7$-$C_{12}$-aralkyl or $C_1$-$C_{12}$-acyl, or $R_7$ is a radical of the formula (III)

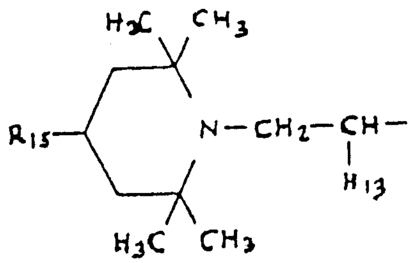

(III)

in which $R_{15}$ is hydrogen, $C_1$-$C_8$-alkoxy, $C_3$-$C_8$-alkenyloxy or benzyloxy and $R_{13}$ is as defined above;

n = zero or 1

r = zero or 1,2 or 3.

The compounds of formula (XI) are described , for instance, in US-A-4.442.250.

(XII)

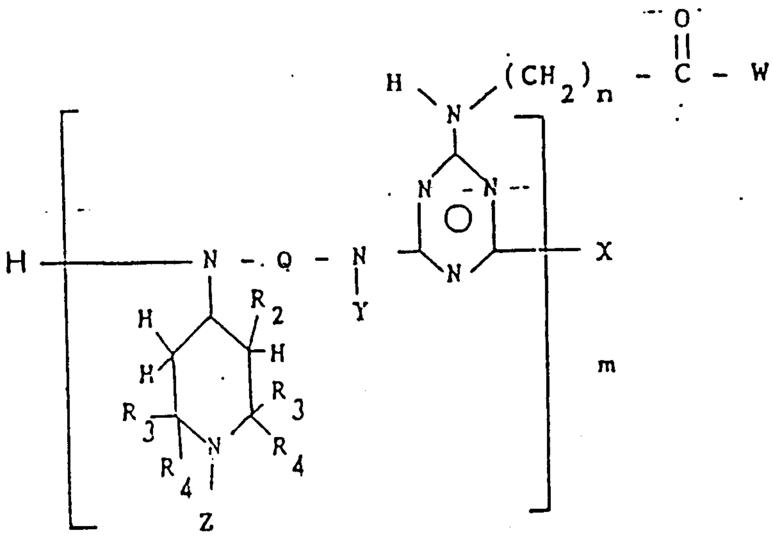

W = a $C_1$-$C_{20}$ alkoxyl, or

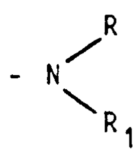

group;

R, $R_1$ = equal or different, may be hydrogen or a $C_1$-$C_{18}$ alkyl radical;

$R_2$ = hydrogen, a $C_1$-$C_{18}$ alkyl or benzyl radical;

$R_3$, $R_4$, equal or different, are a $C_1$-$C_{18}$ alkyl, benzyl, phenylethyl radical , or they form with the carbon atom they are bound to, a $C_5$-$C_{10}$ cycloalkyl group;

Z = hydrogen or a $C_2$-$C_3$ hydroxyalkyl, $C_1$-$C_{18}$ alkyl, hydroxyl radical;

Q = a $C_2$-$C_{20}$ linear or branched alkylene, $C_5$-$C_{10}$ cycloalkylene, $C_6$-$C_{12}$ arylene, $C_8$-$C_{14}$ aralkylene radical;

Y = hydrogen or a $C_1$-$C_{20}$ alkyl group, or a group of formula:

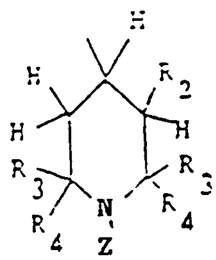

X = halo, $C_1$-$C_8$ alkylamino, di($C_1$-$C_8$) alkylamino, pyrrolidyl, or morpholino
n = a whole number comprised between 1 and 3, extremes included,
m = a whole number greater than 1.
Such compounds are described in US-A-4386177.

(XIII)

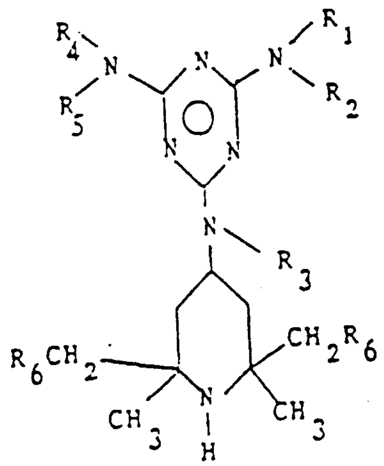

wherein:
$R_1$, $R_2$, $R_3$, $R_4$, $R_5$ equal or different, may be: a $C_1$-$C_{18}$ alkyl; $C_5$-$C_{12}$ cycloalkyl; $C_7$-$C_{14}$ aralkyl radical; or a group having formula (XIV):

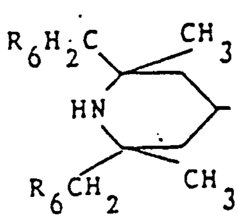

(XIV)

or a radical having formula

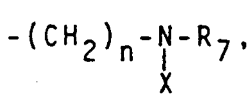

or formula

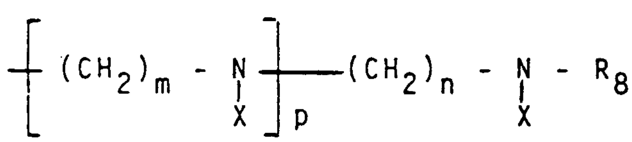

$R_6$ = hydrogen or a $C_1$-$C_5$ alkyl radical

$R_7$,$R_8$, equal or different, a hydrogen or a $C_1$-$C_{18}$ alkyl, $C_5$-$C_{12}$ cycloalkyl; $C_7$-$C_{14}$ phenylalkyl radical;

m and n, equal or different, are whole numbers ranging between 2 and 6;

p = a whole number ranging between 0 and 3, extremes included;

X = a radical having formula:

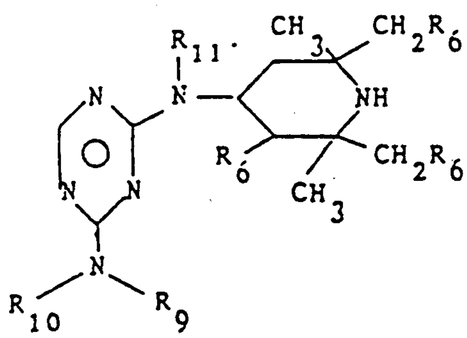

wherein $R_{10}$ and $R_{11}$, equal or different, are hydrogen or a $C_1$-$C_{18}$ alkyl radical, optionally substituted by hydroxyl, alkoxyl, $C_1$-$C_4$ dialkylamino groups, or they are $C_5$-$C_{12}$ cycloalkyl groups, or phenyl groups, substituted by $C_1$-$C_{18}$ alkyl radicals;

$R_9$ = hydrogen, or a $C_1$-$C_{18}$ alkyl, $C_5$-$C_{12}$ cycloalkyl, $C_7$-$C_{14}$ aralkyl group or a group having formula (XIV).

The compounds of such formula (XIII) are described in US-A-4376836.

(XV)

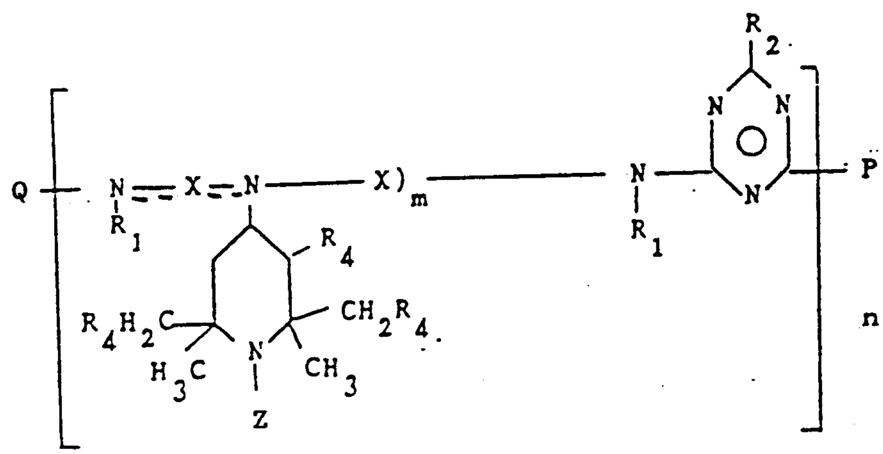

wherein:

Z = hydrogen, or a $C_1$-$C_{18}$ alkyl; $C_3$-$C_{12}$ alkenyl; $C_3$-$C_5$ alkynyl; $C_3$-$C_{18}$ alkoxyalkyl group; $C_2$-$C_4$ hydroxyalkyl group, optionally substituted by phenyl or phenoxy groups; a $C_7$-$C_{18}$ aralkyl group;

$R_4$ = hydrogen or methyl radical

$R_2$ = hydrogen, or cyano, phenylic, azidic, hydrazidic group or $-OR_5$, $-SR_5$,

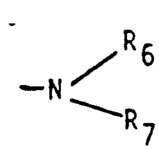

group

$R_5$ = hydrogen, or a $C_1$-$C_{18}$ alkyl, $C_3$-$C_{12}$ alkenyl, $C_3$-$C_{18}$ alkoxyalkyl, $C_5$-$C_{12}$ cycloalkyl, $C_7$-

C$_{18}$ aralkyl, $C_6$-$C_{10}$ aryl group;

$R_6$, $R_7$, equal or different, may be hydrogen, a $C_1$-$C_{23}$ alkyl, $C_3$-$C_{18}$ alkenyl, $C_3$-$C_5$ alkynyl, $C_2$-$C_4$ hydroxyalkyl, $C_2$-$C_5$ cyanoalkyl, $C_5$-$C_{12}$ cycloalkyl, $C_7$-$C_{18}$ aralkyl, $C_6$-$C_{16}$ aryl group;

$R_1$ = hydrogen, or a $C_1$-$C_{23}$ alkyl, $C_3$-$C_{12}$ cycloalkyl, $C_7$-$C_{18}$ aralkyl, $C_6$-$C_{10}$ aryl group;

X = a $C_2$-$C_6$ alkylene group

Q = hydrogen, or a $C_1$-$C_{24}$ aryl group or group having formula:

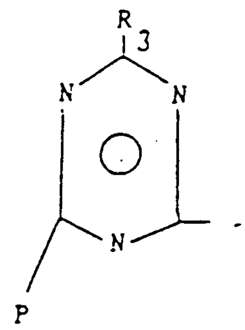

P = a halogen atom, or

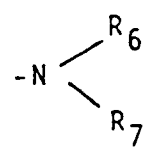

group, or hydroxyl, or a -OMe group, wherein Me is an alkaline or alkaline-earth metal having valence 1 or 2, or

P is a 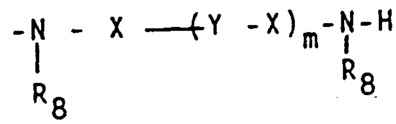

or

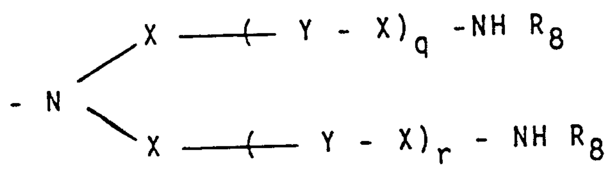

group

wherein:

$R_8$ = Q, or $C_1$-$C_{23}$ alkyl, $C_3$-$C_{12}$ cycloalkyl, $C_7$-$C_{18}$ aralkyl, the aryl group being in particular a $C_6$-$C_{10}$ aryl group,

Y = -O-, or -S-, or

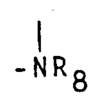

m = a whole number between 0 and 4, extremes included

n = a whole number between 1 and 3, extremes included

p = a whole number between 0 and 3, extremes included

q = 0, 1 or 2
r = 0,1, 2 or 3
whereas the sum r + q cannot be over value 3.
The compounds of formula (XV) are described in US-A- 4315859.

(XVI) 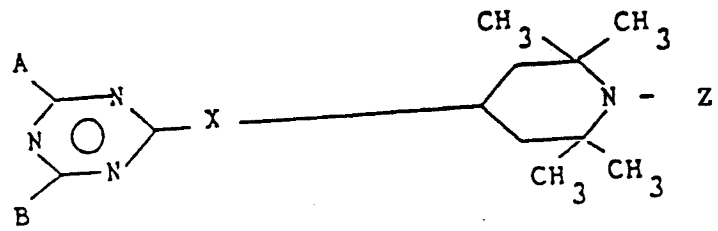

wherein:

Z = hydrogen, a $C_1$-$C_{12}$ alkyl, $C_3$-$C_7$ alkenyl, $C_7$-$C_{11}$ phenylalkyl- cyanomethyl, $C_2$-$C_{18}$ alkanoil, $C_3$-$C_{18}$ alkenoyl, -CON(R)$_2$(R$_3$) or -CH$_2$-CH(R$_4$)-OH group;
$R_2$ = a $C_1$-$C_{12}$ alkyl, allyl, cyclohexyl, benzyl, phenyl, or a $C_7$-$C_{12}$ alkylphenylradical;
$R_3$ = hydrogen, a $C_1$-$C_{12}$ alkyl, allyl or benzyl radical;
$R_2$ and $R_3$, together with the nitrogen atom they are bound to, may form a heterocyclic ring having 5-6 members;
$R_4$ = hydrogen, a $C_1$-$C_{12}$ alkyl, phenyl, $C_2$-$C_{13}$ alkoxymethyl or phenoxymethyl radical;
X = a bivalent group having formula -O-; -N($R_5$)-;

$-NH-CH_2-$

$-CH_2-$;

-NH-(CH$_2$)$_2$-O-; -NH(CH$_2$)$_3$-O-; or -N($R_5$)-$R_7$-N($R_6$)-;
$R_5$ = hydrogen, a $C_1$-$C_{12}$ alkyl, $C_3$-$C_7$ alkenyl, cyclohexyl, $C_3$-$C_{12}$ alkoxyalkyl, $C_5$-$C_{12}$ alkenoxyalkyl, $C_4$-$C_{12}$ dialkylaminoalkyl, benzyl radical, or -CH$_2$-CH($R_4$)-OH group, or a group having formula

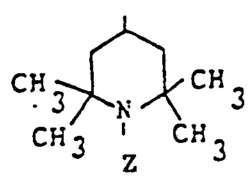

or

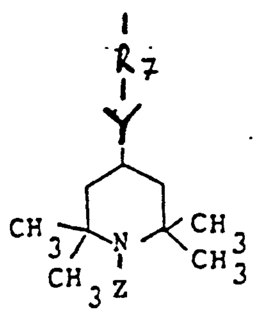

Y = a bivalent group having formula -O- or -N$R_6$-
$R_6$ = hydrogen, a $C_1$-$C_{12}$ alkyl, $C_3$-$C_7$ alkenyl, cyclohexyl radical or a group -CH$_2$-CH($R_4$)-OH

or a group

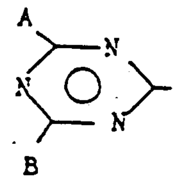

$R_7$ = a $C_1-C_{12}$ alkylene, whose chain may be interrupted by 1,2 or 3 -O- or-N($R_6$)- groups, or $R_7$ may be a $C_6$-$C_{14}$ cycloalkylene group or cycloalkylendialkylene group A and B, equal to or different from each other, may be:

(a)

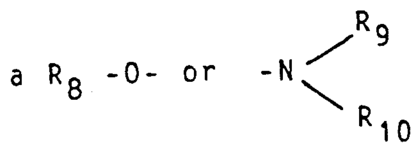

group, wherein:

$R_8$ = a $C_1$-$C_{12}$ alkyl, $C_3$-$C_7$ alkenyl, $C_3$-$C_{12}$ alkoxyalkyl, $C_4$-$C_{12}$ dialkylaminoalkyl, cyclohexyl, benzyl, phenyl, $C_7$-$C_{12}$ alkylphenyl radical;

$R_9$ = a $C_1$-$C_{12}$ alkyl, $C_3$-$C_7$ alkenyl, $C_5$-$C_8$ cycloalkyl, $C_3$-$C_{12}$ alkoxyalkyl $C_5$-$C_{12}$ alkenoxyalkyl $C_4$-$C_{12}$ dialkylaminoalkyl radical, a -$CH_2$-CH($R_4$)-OH group, a phenyl, $C_7$-$C_{12}$ alkylphenyl, $C_7$-$C_{11}$ phenylalkyl radical;

$R_{10}$ = hydrogen, a $C_1$-$C_{12}$ alkyl, $C_3$-$C_7$ alkenyl, $C_5$-$C_8$ cycloalkyl, $C_3$-$C_{12}$ alkoxyalkyl, $C_5$-$C_{12}$ alkenoxyalkyl, $C_4$-$C_{12}$ dialkylaminoalkyl, $C_2$-$C_{12}$ alkanoyl, $C_3$-$C_{12}$ alkenoyl radical, a -$CH_2$-CH($R_4$)-OH group, a $C_7$-$C_{11}$ phenylakkyl radical, or $R_9$ and $R_{10}$ together with the nitrogen atom they are bound to, form a heterocyclic ring with 5 or 6 members;

or

(b) a group having formula:

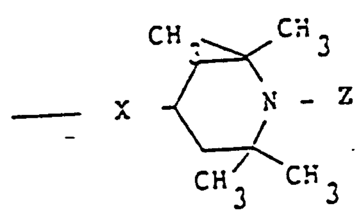

with the general condition that at least one of the groups Z , $R_2$, $R_3$, $R_4$, $R_5$, $R_6$, $R_8$, $R_9$, $R_{10}$ represents an alkenyl or alkenoyl group.

The compounds having general formula XVI are described in European patent application EP-A-0101411

(XVII) 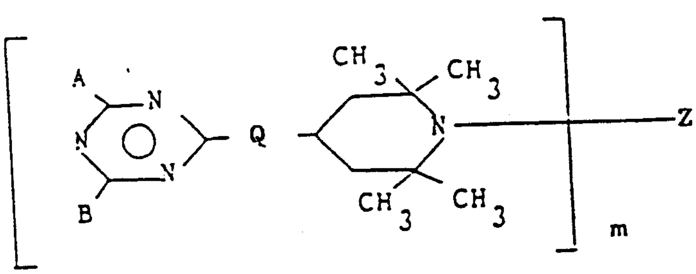

wherein m = 2,3 or 4,

Z = a radical having valence m, such as a $C_2$-$C_{12}$ alkylene, $C_4$-$C_8$ alkenylene, xylilene radical, $-CH_2-CH(OH)-CH_2$ group; or a

$$-CH_2-CH(OH)-CH_2-X-CH_2-,$$

$-CH(OH)-CH_2-$;

$$-\!\!\left[CH_2-CH(OH)-CH_2-\right]_3 K;\quad -\!\!\left[CH_2-CH(OH)-CH_2-\right]_4 Y$$

group wherein

X = a

$$-O-R_{12}-O-$$

radical or $-OOC-R_{13}-COO-$ radical wherein $R_{12}$ and $R_{13}$ are bivalent aliphatic, cycloaliphatic, aromatic or araliphatic radicals,

K = a trivalent aliphatic or heterocyclic group;

Y = a tetravalent aliphatic group;

Q = a bivalent group having formula -O-, or $-N(R_{14})-$, wherein

$R_{14}$ = hydrogen, a $C_1$-$C_{12}$ alkyl, $C_3$-$C_7$ alkenyl, cyclohexyl, $C_2$-$C_4$ hydroxyalkyl, $C_3$-$C_{12}$ alkoxyalkyl, $C_5$-$C_{12}$ alkenoxyalkyl, $C_4$-$C_{12}$ dialkylaminoalkyl, benzyl radical.

A and B have the meaning expressed in formula XVI, under the condition that the molecule contains at least an alkenyl or alkenoyl group

(XVIII)

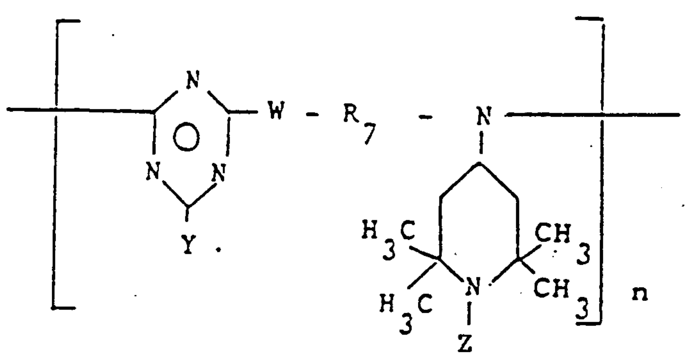

wherein:

n = a whole number ranging between 2 and 20, extremes included

Y = a group having formula $R_8$-O- or $(R_9)(R_{10})$ N-, wherein $R_8$ and $R_9$ are $C_3$-$C_7$ alkenyl groups.

W = a bivalent group having formula -O- or

$$-N(R_{16})$$

wherein

$R_{16}$ = hydrogen, or a $C_1$-$C_{12}$ alkyl, $C_3$-$C_7$ alkenyl, cyclohexyl, benzyl radical, or a group having formula

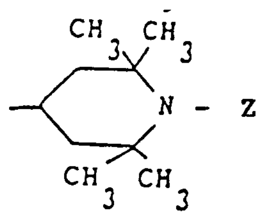

and wherein Z, $R_7$ and $R_{10}$ have the meaning expressed for formul XVI

(XIX)

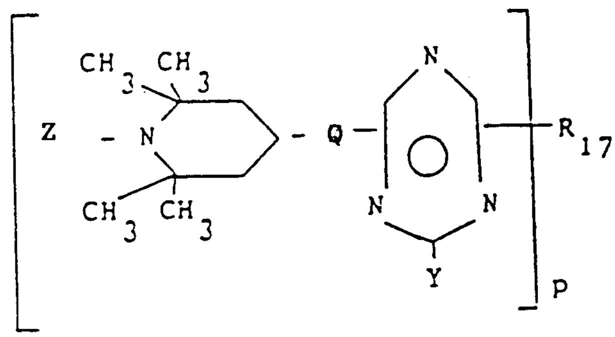

wherein:

- Z has the meaning expressed in formula XVI
- Q has the meaning expressed in formula XVII
- Y has the meaning expressed in formula XVIII
- $R_{17}$ is the radical, having valence p, of a polyol or of a polyamine
- p = 2,3 or 4.

The compounds having formula XVII, XVIII, XIX are described in European patent application EP-A-0101411.

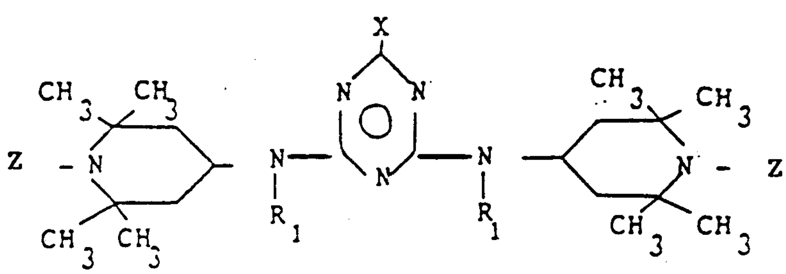

(XX)

wherein:

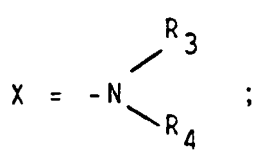

$-OR_5$; $-SR_5$ group; or

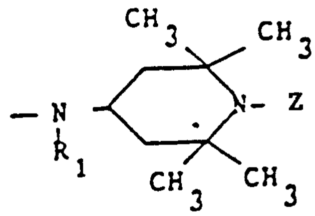

group.

$R_1$ may be a $C_1$-$C_{18}$ alkyl; $C_5$-$C_{12}$ cycloalkyl; $C_7$-$C_{11}$ aralkyl radical; a $C_3$-$C_{12}$ alkyl radical, whose chain is interrupted by -O- or by -N($R_6$)- groups; a $C_2$-$C_6$ carboxyalkyl, $C_3$-$C_{12}$ alkoxycarboxalkyl radical; or an -A-O-Q group, wherein A = methylene, ethylene or trimethylene, and Q = a phenyl radical, non-substituted or mono, bi or trisubstituted by $C_1$-$C_4$ alkyl radicals; or Q is a group having formula

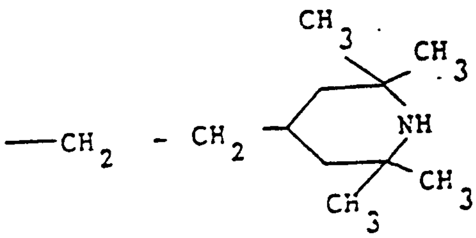

Z = hydrogen, a $C_1$-$C_4$ alkyl, benzyl, allyl, acetyl, acryloyl, oxyl radical, a -$CH_2$-CH($R_7$)OH group or a

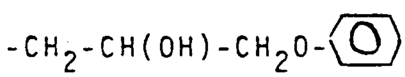

or a -$CH_2$CN group.

$R_3$, $R_4$ equal or different, are a $C_1$-$C_{18}$ alkyl; $C_5$-$C_{12}$ cycloalkyl; $C_7$-$C_{11}$ aralkyl radical; a $C_3$-$C_{12}$ alkyl radical, whose chain is interrupted by -O- or

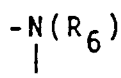

groups; $C_2$-$C_4$ hydroxyalkyl; $C_3$-$C_{15}$ acyloxyalkyl; $C_2$-$C_6$ carboxyalkyl; $C_3$-$C_{12}$ alkoxycarbonylalkyl groups and furthermore $R_4$ may be hydrogen, whereas $R_3$ and $R_4$ may form, with the nitrogen atom they are bound to, a heterocyclic ring.

$R_5$ = a $C_1$-$C_{18}$ alkyl; $C_3$-$C_{12}$ alkenyl; $C_5$-$C_{12}$ cycloalkyl; $C_7$-$C_{11}$ aralkyl radical; a $C_3$-$C_{12}$ alkyl radical, whose chain is interrupted by an -O- or

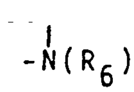

group.

$R_6$ = a $C_1$-$C_4$ alkyl radical

$R_7$ = a methyl, ethyl or phenyl radical

The compounds of formula (XX) are described in European patent application EP-A-0107615.

(XXI)

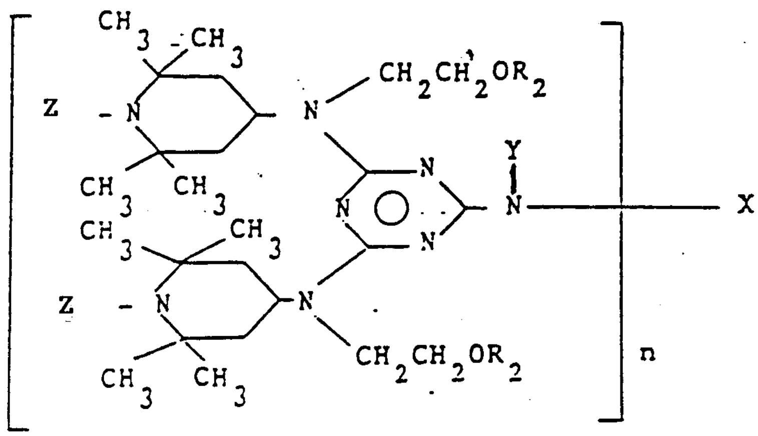

wherein:

Z = hydrogen or methyl radical

$R_2$ = hydrogen, a $C_1$-$C_{18}$ alkanoyl radical, or 3-(3,5-di-t. butyl-4-hydroxyphenyl) propionyle group

n = 1 or 2, therefore:

when n = 1:

X = a $C_1$-$C_{18}$ alkyl, benzyl, $-CH_2$-$CH_2$-$OR_2$ group

Y = hydrogen, or a group having formula

(XXII)

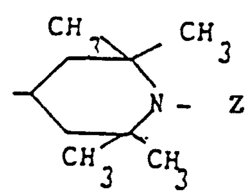

or having formula

(XXIII)

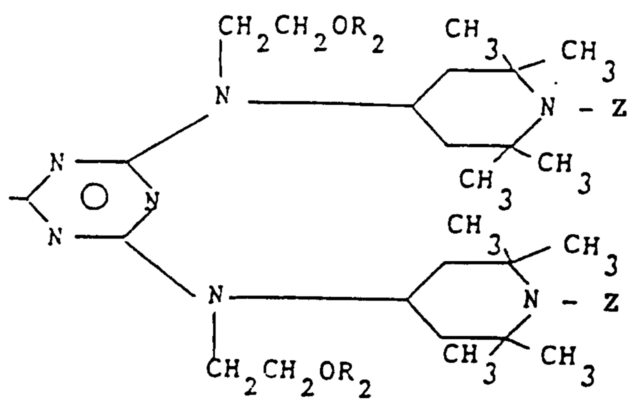

whereas, when n = 2

X = a $C_2$-$C_6$ alkylene group, a xylilene group or a group having formula:

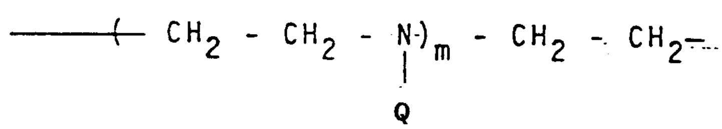

wherein

m = a whole number ranging between 1 and 4, extremes included,
Q = a group having formula (XXIII)
Y = hydrogen, or a group having formula XXII.

The compounds of formula XXI are described in European patent application EP-A-0022080.

Preferred compounds, comprised in general formula (II), fall within restricted formulas of the following type:

(XXIV)

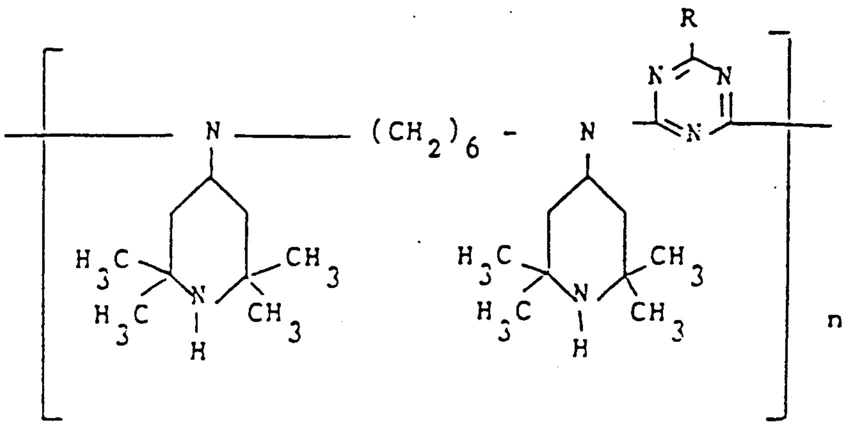

wherein:
n = a whole number ranging between 2 and 20

R = a 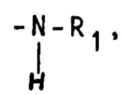

or

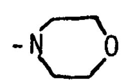

radical wherein
$R_1$ = an alkyl radical containing from 1 to 10 carbon atoms and preferably $-C(CH_3)_2-CH_2-C(CH_3)_3$ radical.

(XXV)

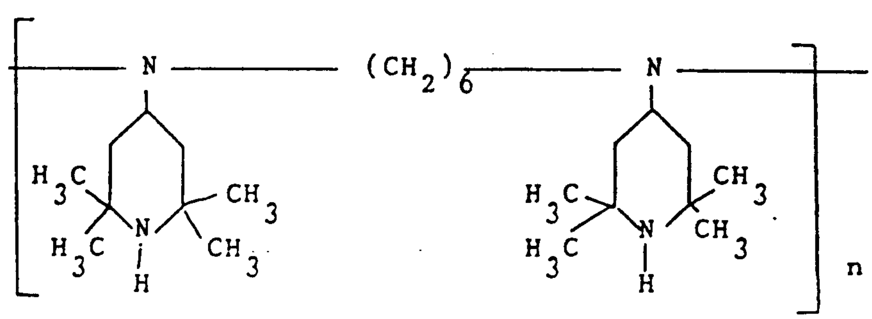

wherein
n = a whole number comprised between 2 and 20, included.

Preferred compounds comprised in general formula (III) fall within the following restricted formulas:

(XXVI)

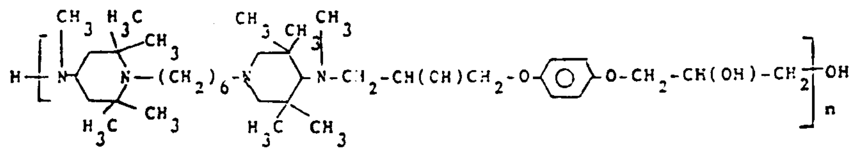

wherein

n = a whole number comprised between 2 and 20, extremes included.

(XXVII)

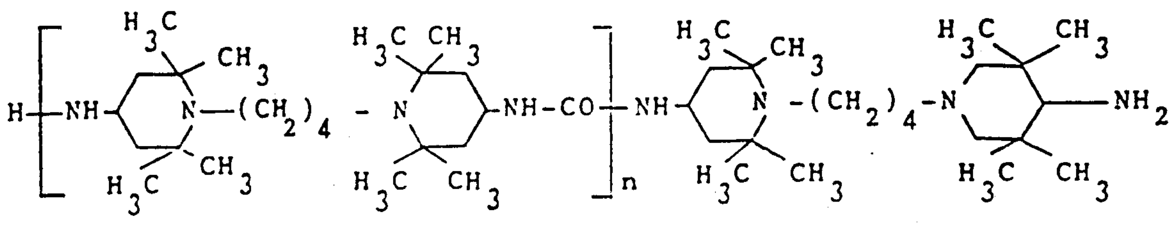

wherein

n = a whole number ranging between 2 and 20, extremes in cluded.

Preferred compounds comprised in general formula (IV) present a formula of the following type:

(XXVIII)

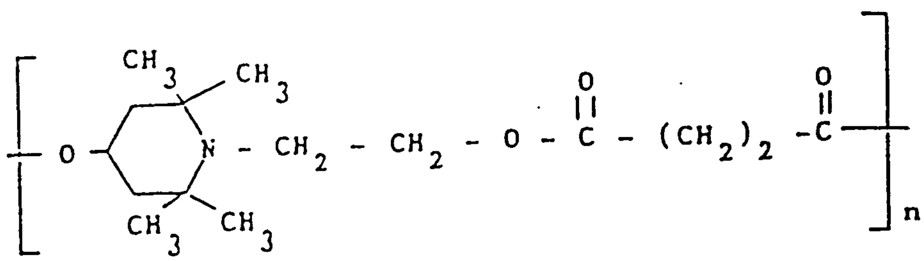

wherein n is a whole number comprised between 2 and 20, extremes included.

Preferred compounds of formula (V) are comprised in the formulas of type:

(XXIX)

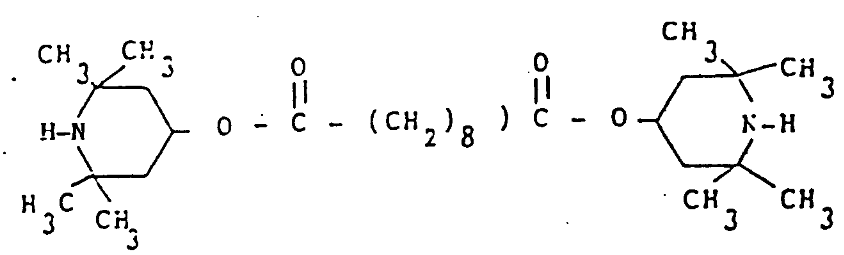

Preferred compounds of formula (VI) are comprised in the following formula of type:

(XXX)

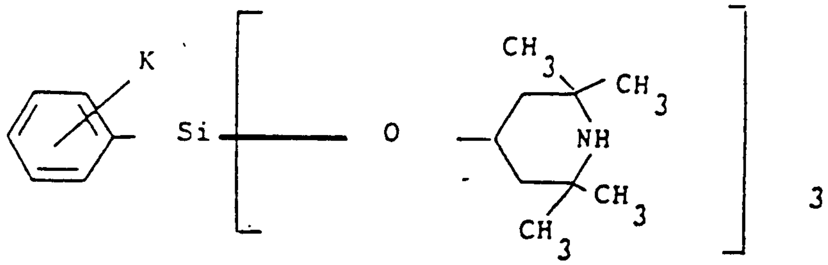

K = H or a halogen atom or a $C_1$-$C_4$ alkyl radical.

Preferred compounds of general formula (VIII) present formulas of type:

(XXXI)

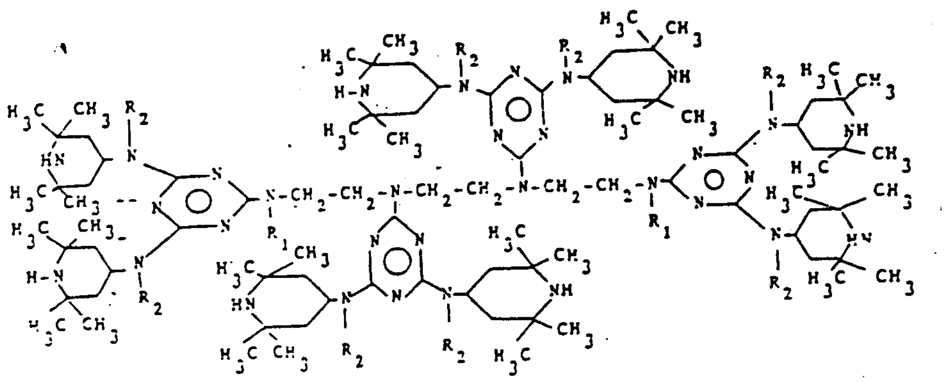

wherein:

$R_1$ = hydrogen, or a $C_1$-$C_{18}$ alkyl radical, or a monovalent organic radical, for instance a substituted piperidinic group.

$R_2$ = hydrogen, a $C_1$-$C_{18}$ alkyl radical or another monovalent organic radical, for instance: $-(CH_2)_n$-Y (wherein n = a whole number comprised between 1 and 12, Y = a -OH or -OR group or a

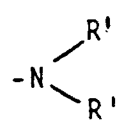

group, wherein R = a $C_1$-$C_{18}$ alkyl radical; R' = a $C_1$-$C_2$ alkyl radical.

As mentioned above, the compounds belonging to classes A and B described herein before, may be used for the purposes of the present invention, by addition to the polymer slurry, before the drying of the same, or, and preferably, before or during the polymerization of the olefinic monomer or monomers, carried out by means of catalysts prepared by reaction of an Al-alkyl compound with a solid component selected from a product comprising a Titanium compound and a magnesium halide, and a product formed by a tetravalent titanium compound which is supported onto a trivalent titanium halide having a surface area greater than 50 $m^2/g$. In particular said polymerization is carried out by means of stereospecific catalysts for the polymerization of alphaolefins and comprising the reaction product of an Al-alkyl compound with catalytic components comprising a Ti compound, in particular $TiCl_4$, and an electron-donor compound, supported on a Mg halide in the active form.

Mg halide in the active form is characterized by a X-ray spectrum wherein the reflections of highest intensity, which appear in the halide spectrum of usual type are replaced by halos.

Catalysts of such type are described in U.S. patents No. 4.107.413, 4.107.414, 4.226.741 and 4.298.718.

Peculiar characteristics of the supported catalysts, endowed with higher stereospecifity and activity in the alpha-olefins polymerization is the one to be prepared with methods which lead to the formation of components comprising the Ti compound on magnesium halide, which do not contain or contain, only in small percentages, Ti compounds heat-extractable by means of hot heptane and of $TiCl_4$.

The preparation of these catalysts is generally carried out under conditions in which the solid

comprising the magnesium halide in the active form is reacted in suspension in the Ti compound; the excess of Ti compound is then removed by filtration at temperatures at which no Ti compound, extractable by means of hot heptane and of $TiCl_4$ at 80° C, remains on the solid; then the solid is washed repeatedly with hydrocarbonic solvents in order to remove any trace of soluble compound of Ti.

According to other methods, Mg halide, electron-donor compound and Ti compound optionally in the presence of coadjuvant agents for the grinding are co-pulverized till magnesium halide is activated, namely till, in the x-ray spectrum of Mg halide, halos appeared in place of the lines of highest intensity appearing in the spectrum of magnesium halide of usual type.

The solid is then subjected to a heat-treatment with a hydrocarbonic solution of a halogenated hydrocarbonic compound and the liquid phase is separated by heat-filtration in order to remove the soluble compounds. Finally the solid is further washed with an aliphatic hydrocarbon.

Examples of these methods are described in European patent applications No. 004789 and No.0004791.

According to another method described in U.S.patent No. 4.146.502, the solid catalytic component obtained by cogrinding both of a Mg halide and of an electron-donor compound and by subsequent treatment with an excess of $TiCl_4$ under heat is further treated in suspension in a halogenated hydrocarbonic solvent separated from the liquid phase and finally washed repeatedly with a hydrocarbonic solvent.

By carrying out the addition of the aforesaid piperidinic compounds during the polymerization and in the case of a polymerization carried out in a discontinuous way, the stabilizing agent can be introduced into the reactor before or together with the components of the catalytic system or successively when the polymerization has already started.

In the continuous systems it can be fed into the reactor together with the catalyst or separately.

In the case of more reactors in series it can be fed into anyone of them.

Therefore object of the present invention is a process for preparing olefinic polymers thermically stable consisting in adding into the polymerization medium of the monomers before, during or after the polymerization or to the polymer before the drying of same or before the removal of the monomer, one or more compounds containing at least a piperidinic group sterically hindered.

The amount of compound that may be added either into the polymerization medium or, alternatively, to the polymer before the drying of same ranges between 0,01 and 1% by weight referred to the polymer and preferably between 0,05 and 0,5%. The olefine polymers to which the process of the present invention is applied comprise crystalline homo- and copolymers such as the linear high- and low-density polyethylene, polypropylene, polybutene and amorphous polymers such as the elastomeric ethylene-propylene copolymers, possibly containing diene monomers. In particular, the process is applied to isotactic, or prevailingly, isotactic polypropylene, to the crystalline propylene-ethylene copolymers containing prevailingly amounts of propylene and further to high impact polypropylene.

The following examples will illustrate the invention without limiting it.

Examples 1-6 relate to the use of the catalytic system prepared according to the process described in example 3 of Italian patent No.1054410 and purpose to show the effectiveness of the different piperidinic compounds used as stabilizing agents.

Examples 7-9 have the same aim but they relate to the catalytic system prepared according to the process described in examples 30-34 of issued European patent application No. 45977.

Example 10 shows that the stabilizing agent can be fed together with the catalyst (in the preceding examples on the contrary it is fed when the polymerization is half-way).

Examples 11-12 and 13 show the negative effect on the isotacticity index of the polymer when the usual catalytic system is used, based on $TiCl_3$/DEAC.

Examples 14-16 exhibit the drawbacks due to the phenolic stabilizing agents.

Example 17 is useful for comparing by using the same additive the stabilization carried out according to the invention and according to the traditional method.

Examples 18-21 relate to the preparation of copolymers of ethylene with propylene and butene-1, respectively, in the presence or absence of the stabilizing agents according to the present invention. All the numeric data are reported on Table (I).

EXAMPLE 1 (of comparison)

5 mmoles of Al (i-Bu)$_3$ and 1,67 mmoles of methyl para-toluate were introduced into 50 ml of hexane. After 5 minutes at room temperature one introduced the amount specified in the Table of a catalytic component prepared according to the process described in Italian patent No.1054410 in example 3.

2,25 l of hydrogen and 0,9 kg of propylene were introduced into a steel autoclave having a capacity of 3 l, equipped with stirrer and thermostat, and the temperature was brought to 70 ° C. Then one introduced the catalytic mixture prepared as described herein before. After two hours the stirring was stopped and the residual propylene was quickly degassed. The obtained polymer was treated for 10 minutes with steam at 100 ° C, then dried in an oven at 50 ° C in a nitrogen flow.

The following measures were carried out on the polymer according to standard methods

- isotacticity index by extraction with hot n-heptane
- intrinsic viscosity in tetrachloroethylene at 135 ° C
- resistance against oxidization (T.O. 150 ° C) in an oven at 150 ° C (Method ASTM D-3012)
- induction time to the oxidization at 180 ° C (Ox. I.T.180 ° C) (D.B.Marshall et al. Polym.Eng. & Sci., 13 - (6), 415 (1973)).

The result reported on Table,showed that the polymer was wholly free from resistance to thermoxidization.

EXAMPLES 2 - 6

One worked as in example 1 with the difference that after 1 hour from the polymerization start the stabilizing agents indicated in the Table and in the specified amount were introduced into the autoclave in the form of a solution or of a suspension in 50 ml of hexane.

The results reported on the Table showed that the polymer had no particular colouring and had a high thermal stability.

Moreover the performances of the catalyst did not turn out to be at all altered.

EXAMPLE 7 (of comparison)

One worked as in example 1, with the difference that a catalyst was used, prepared according to the method of issued European patent application No. 45977, examples 30-34, together with 5 mmoles of $AlEt_3$ and 0.25 mmoles of phenyltriethoxysilane. In this case as well, the obtained polymer had no thermal stability.

EXAMPLES 8 - 9

One worked as in example 7 with the difference that after 1 hour from the polymerization start the specified amounts of the stabilizing agents indicated on the Table were introduced into the autoclave. One obtained polymers free from colouring and endowed with a high thermal stability whereas the catalyst performances did not turn out to be damaged.

EXAMPLE 10

One worked as in examples 2-6 with the difference that the stabilizing agent was introduced into the autoclave together with the catalyst. From the comparison with example 2 one deduced that such modification did not change the final result.

EXAMPLE 11 (of comparison)

One worked as in example 1 using, however, as activated catalyst $TiCl_3$.0.33 $AlCl_3$ and 10 mmoles of $AlEt_2Cl$ as co-catalyst. A polymer was obtained wholly free from thermal stability.

EXAMPLES 12-13

One worked as in example 11 with the difference that the stabilizing agent in the amount indicated on the Table was introduced into the autoclave together with the catalyst. From the comparison with example 11 one remarked that with this catalytic system the addition of the stabilizing agent lowers in an unacceptable degree the isotacticity index of the polymer.

EXAMPLES 14-16

One worked as in examples 2-6 while using, however, the stabilizing agents of phenolic type as

indicated on the Table. The obtained results showed that such stabilizing agents although they had been added in a lower amount with respect to the piperidinic ones steric hindered either they interferred on the catalytic performances (ex.14) or imparted an undesired colouring to the polymer (ex.15 and 16) and therefore they could not be used for the desired purpose.

EXAMPLE 17 (of reference)

The example relates to a polymer stabilized with the traditional method, namely by adding the additive during the granulation stage.

By comparing examples 2,8 and 10 with example 17 we were able to conclude that a stabilization carried out with the process object of the present invention gave a result at least equal to the one carried out with the traditional method.

EXAMPLE 18 (comparative test)

Into a stainless steel autoclave having a capacity of 2.5 l equipped with a stirrer and a thermoregulating device there was introduced at room temperature and in an isobutane stream a catalytic mixture consisting of 0,6 g of $(Et)_3Al$ and of 8,8 mg of a catalyst prepared according to example 5 of Italian Patent No.1,078,995 along with 2o ml of hexane.

350 g of isobutane were then introduced and the temperature was quickly brought to 65 ° C.

$H_2$ was added up to a pressure of 12.5 kg/cm$^2$ gauge, then 300 g of butene-1 were added and at last the total pressure was brough to 25 kg/cm$^2$ gauge with ethylene.

The autoclave was maintained at 65 ° C and 25 kg/cm$^2$ gauge during two hours by continuously replenishing the consumed ethylene and butene-1.

After 2 hours, stirring was stopped and the monomer mixture as well as the solvent were allowed to quickly evaporate. The resulting slurry was treated with steam at 100 ° C during 10 minutes whereafter it was dried at 70 ° C in a nitrogen stream.

Obtained were 220 g of a copolymer containing 8,2% by weight of butene and 91,8% by weight of ethylene such polymer being charaterized as is apparent from the values reported in the Table by a very low resistance to thermo-oxidation.

EXAMPLE 19

It was operated as in example 15 with the exception that in the present case 10 ml of hexane containing 0,32 g of CHIMASSORB 944 were injected into the autoclave under an ethylene pressure after a 1-hour polymerization.

At the end of the test there were obtained from 8,6 g of catalyst 207 g of copolymer at 6,5% by weight of butene containing 1540 ppm of stabilizer and endowed with a much higher resistance to thermo-oxidation than in the preceding case as is apparent from the values reported in the Table.

EXAMPLE 20 (comparative test)

Into the same autoclave utilized in the preceding examples 18 and 19 there were introduced at room temperature and in a gaseous propylene flow 1,1 g of $(i\text{-}C_4H_9)_3Al$ dissolved in 25 ml of hexane. Subsequently, 750 g of propylene were added, the temperature was quickly brought to 40 ° C and ethylene was fed till reaching a total pressure of 18,8 kg/cm$^2$ gauge.

Now a suspension consisting of 50 ml of hexane and 5,3 mg of the same catalyst used in example 18 was introduced under an ethylene pressure into the autoclave.

The autoclave was maintained at 40 ° C and 18,8 kg/cm$^2$ g during 1 hour while continuously replenishing the consumed ethylene.

At last, following the procedure of example 18, there were obtained 160 g of a rubber-like polymer having a composition consisting for 55.4% by weight of ethylene and for 44.6% by weight of propylene and exhibiting an inherent viscosity equal to 4,05 dl/g. The yield was of 30.2 kg of polymer/g of catalyst. As it results from the data in the Table, the resistance to thermo-oxidation of the polymer is very low.

EXAMPLE 21

It was operated as in example 20 with the exception that in this case 30 minutes after the polymerization beginning 10 ml of hexane containing 0,39 g of CHIMASSORB 905 were introduced into the autoclave under ethylene pressure.

At the end of the test there were obtained from 5 mg of catalyst 140 g of a copolymer having a composition consisting for 55,5% by weight of ethylene and for the remaining 44,5% by weight of propylene and exhibiting an inherent viscosity equal to 4.2 dl/g. The yield was of 28 kg of polymer/g of catalyst. The polymer contains 2860 ppm of the stabilizing compound and, as it results from the Table, it has a much higher resistance to thermo-oxidation than the polymer of example 2o.

TABLE

| EXAMPLE N. | STABILIZING AGENT Type/weight (g) | CATALYST (g) | OBTAINED POLYMER (g) | YIELD (kg/pol/g/cat) | ISOTACTICITY INDEX (%) | INTRINSEC VISCOSITY (dl/g) | COLOUR | STABILIZING AGENT CONC. (ppm) | Ox. I.T. at 180°C (minutes) | T.O. at 150°C (days) |
|---|---|---|---|---|---|---|---|---|---|---|
| 1 (comp.) | - | 0,030 | 360 | 12,0 | 93,0 | 1,75 | white | - | 0 | 1 |
| +2 | Chimassorb® 944 - 0,561 | 0,0272 | 340 | 12,5 | 92,8 | 1,80 | white | 1650 | 27' | 16 |
| 3 | Cyasorb UV® 3346-0,585 | 0,0322 | 380 | 11,8 | 93,0 | 1,9 | white | 1540 | 30' | 11 |
| 4 | Chimassorb® 905 - 0,508 | 0,0348 | 400 | 11,5 | 92,9 | 1,7 | white | 1270 | 16' | 22 |
| 5 | Tinuvin® 144 - 0,372 | 0,0258 | 310 | 12,0 | 92,6 | 1,95 | white | 1200 | 7' | 1 |
| 6 | Spinuvex® A 36-0,450 | 0,0257 | 270 | 10,5 | 92,9 | 2,0 | white | 1670 | 33' | 4 |
| 7 (comp.) | - | 0,0195 | 450 | 23,1 | 94,1 | 1,7 | white | - | 0' | 1 |
| 8 | Chimassorb® 944 - 0,588 | 0,0312 | 340 | 25 | 93,8 | 1,83 | white | 1680 | 28' | 16 |
| 9 | Cyasorb UV® 3346-0,720 | 0,0195 | 450 | 23,1 | 94,1 | 1,95 | white | 1600 | 35' | 12 |
| 10 | Chimassorb® 944 - 0,588 | 0,0312 | 340 | 11,9 | 93,2 | 1,80 | white | 1730 | 28' | 17 |
| 11 (comp.) | - | 0,090 | 342 | 3,8 | 88,0 | 1,6 | white | - | 0' | 1 |
| 12 (comp.) | Cyasorb® UV 3346-0,324 | 0,090 | 360 | 4,0 | 50,0 | 1,4 | white | 900 | n.d. | n.d. |
| 13 (comp.) | Chimassorb® 944 - 0,321 | 0,091 | 345 | 3,8 | 50 | 1,5 | white | 930 | n.d. | n.d. |
| 14 (comp.) | Irganox® 1010 - 0,156 | 0,030 | 300 | 10,0 | 89,5 | 1,4 | white | 520 | n.d. | n.d. |
| 15 (comp.) | Irganox® 1330 - 0,219 | 0,025 | 300 | 12,0 | 92,0 | 1,85 | yellow | 730 | 5' | n.d. |
| 16 (comp.) | Cyanox® 2246 - 0,220 | 0,033 | 350 | 10,6 | 92,5 | 1,7 | deep yellow | 630 | 11' | n.d. |
| 17 (comp.) | Chimassorb® 944 | - | Stabilizing agent added during the extrusion stage | | | | - | 2000 | 17' | n.d. |

TABLE

| EXAMPLE N. | STABILIZING AGENT Type/weight (g) | CATALYST (g) | POLYMER (g) | YIELD (kg/pol/ g/cat) | ISOTACTI-CITY INDEX (%) | VISCOSITY | COLOUR | STABILIZING AGENT (ppm) | Ox. I.T. a 180°C | T.O. a 150°C (days) |
|---|---|---|---|---|---|---|---|---|---|---|
| 18 (comp.) | - | 0,0088 | 220 | 25 | not det | MIE=0,89 | white | — | 5' | 9* |
| 19 | Chimassorb® 944 - 0,32 | 0,0086 | 207 | 24,1 | not det | MIE=0,98 | white | 1540 | > 75' | > 15* |
| 20 (comp.) | - | 0,0053 | 160 | 30,2 | not det | $\eta$ =4,05 | white | — | 4' | not det |
| 21 | Chimassorb® 905 - 0,39 | 0,005 | 140 | 28 | not det | $\eta$ =4,2 | white | 2860 | > 40' | not det |

* Determined at 120°C

Chimassorb® 944 = an oligomeric compound produced by CHIMOSA Chim. Org. S.p.A. Company.

Cyasorb® UV 3346 = an oligomeric compound produced by Am. Cyanamide Company.

Chimassorb® 905 = a monomeric compound produced by CHIMOSA Chim.Org. S.p.A. Company.

Tinuvin® 144 = a monomeric compound produced by CIBA GEIGY Company.

Spinuvex® A 36 = an oligomeric compound produced by Montedison S.p.A. Company.

Irganox® 1010 = monomeric compound produced by CIBA GEIGY Company.

Irganox® 1330 = monomeric compound produced by CIBA GEIGY Company.

Cyanox® 2246 = monomeric compound produced by American Cyanamide Company.

## Claims

**1.** A process for the manufacture of thermally stable olefinic polymers which polymers are obtained by means of catalysts prepared by reaction of an Al-alkyl compound with a solid component selected from a product comprising a titanium compound and a magnesium halide and a product formed by a tetravalent titanium compound which is supported onto a trivalent titanium halide having a surface area greater than 50 $m^2/g$, which process comprises adding to the polymerization slurry during the polymerization or at the end of the polymerization a compound containing in the molecule one or more steric hindered piperidinic groups that are represented by the following general formula

(I)

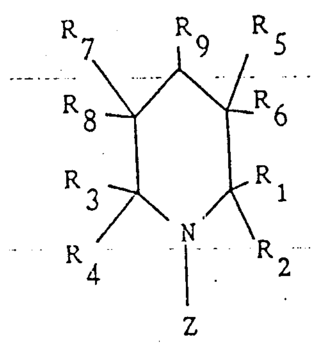

wherein:

$R_1$,$R_2$ may be alkyl radicals containing from 1 to 4 carbon atoms or rings of 2,2,6,6-tetramethylpiperidine or together they may form with the piperidinic carbon atom they are bound to a cycloalkyl group containing from 5 to 10 carbon atoms,

$R_3$,$R_4$ = alkyl radicals containing from 1 to 18 carbon atoms or together, they form with the piperidinic carbon atom they are bound to a cycloalkyl group containing from 5 to 10 carbon atoms,

$R_5$, $R_6$, $R_7$, $R_8$, $R_9$, Z = hydrogen or an organic radical, preferably a $C_1$-$C_{18}$alkyl, $C_3$-$C_{12}$ alkenyl, $C_7$-$C_{18}$ aralkyl radical, phenolic compounds being excluded.

2. A process according to claim 1 wherein the compound containing in the molecule one or more steric hindered piperidinic groups is an oligomeric product.

3. A process according to claim 1 wherein the compound containing one or more steric hindered piperidinic groups is a monomeric product wherein the piperidinic rings optionally may be substituted and bound to each other.

4. A process according to claim 1 wherein the compound containing steric hindered piperidinic groups is added to the monomer or to the mixture of monomers at the start or during the polymerization.

5. A process according to claim 1 wherein the compound containing steric hindered piperidinic groups is added to the polymer slurry before separating the non-reacted monomer.

6. A process according to one or more of the preceding claims wherein the compound containing steric hindered piperidinic groups is added in an amount ranging between 0,01 and 1% by weight, referred to the polymer.

7. A process according to claim 1 wherein the olefinic polymers are obtained by means of stereospecific catalysts comprising the reaction product of an Al-alkyl compound with catalytic components comprising a titanium compound and an electron-donor compound supported on a magnesium halide in the active form.

**Revendications**

1. Un procédé de fabrication de polymères oléfiniques thermiquement stables, lesquels polymères sont obtenus à partir de catalyseurs préparés par réaction d'un composé alkyl-aluminium avec un composant solide consistant en un produit comprenant un composé du titane et un halogénure de magnésium et un produit formé par un composé du titane tétravalent qui est fixé sur un support consistant en un halogénure de titane trivalent présentant une aire superficielle supérieure à 50 $m^2/g$, lequel procédé consiste à ajouter à la suspension de polymérisation au cours de la polymérisation ou en fin de polymérisation, un composé dont la molécule contient un ou plusieurs groupes pipéridiniques à empêchement stérique qui sont représentés par la formule générale suivante:

(I)

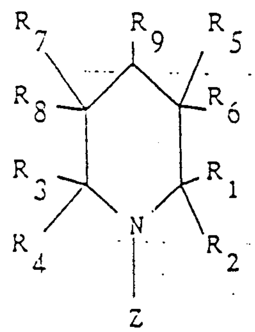

dans laquelle:

| | |
|---|---|
| $R_1$ et $R_2$ | peuvent être des radicaux alkyles contenant de 1 à 4 atomes de carbone ou des cycles de 2,2,6,6-tétraméthylpipéridine, ou forment ensemble, avec l'atome de carbone pipéridinique auquel ils sont liés, un groupe cycloalkyle contenant de 5 à 10 atomes de carbone; |
| $R_3$ et $R_4$ | sont des radicaux alkyles contenant de 1 à 18 atomes de carbone, ou forment ensemble, avec l'atome de carbone pipéridinique auquel ils sont liés, un groupe cycloalkyle contenant de 5 à 10 atomes de carbone; |
| $R_5$, $R_6$, $R_7$, $R_8$, $R_9$, Z | sont des atomes d'hydrogène ou un radical organique, de préférence alkyle comprenant de 1 à 18 atomes de carbone, alkényle comprenant de 3 à 12 atomes de carbone, aralkyle comprenant de 7 à 18 atomes de carbone, les composés phénoliques étant exclus. |

2. Un procédé selon la revendication 1, dans lequel le composé dont la molécule contient un ou plusieurs groupes pipéridiniques à empêchement stérique est un oligomère.

3. Un procédé selon la revendication 1, dans lequel le composé contenant un ou plusieurs groupes pipéridiniques à empêchement stérique est un monomère dans lequel les cycles pipéridiniques peuvent éventuellement être substitués ou liés entre eux.

4. Un procédé selon la revendication 1, dans lequel le composé contenant les groupes pipéridiniques à empêchement stérique est ajouté au monomère ou au mélange de monomères au commencement ou au cours de la polymérisation.

5. Un procédé selon la revendication 1, dans lequel le composé contenant les groupes pipéridiniques à empêchement stérique est ajouté à la suspension polymère que l'on en sépare le monomère n'ayant pas réagi.

6. Un procédé selon une ou plusieurs des revendications précédentes, dans lequel le composé contenant les groupes pipéridiniques à empêchement stérique est ajouté en une quantité comprise entre 0,01 et 1% en poids exprimés par rapport au poids du polymère.

7. Un procédé selon la revendication 1, dans lequel les polymères oléfiniques sont obtenus à l'aide de catalyseurs stéréospécifiques comprenant le produit de la réaction d'un composé alkyl-aluminium avec des constituants catalytiques comprenant un composé du titane et un composé électrodonneur supporté sur un halogénure de magnésium sous forme active.

**Patentansprüche**

1. Verfahren zur Herstellung von thermisch stabilen olefinischen Polymeren, welche Polymere mit Hilfe von Katalysatoren erhalten werden, hergestellt durch Umsetzung einer Al-Alkyl-Verbindung mit einer festen Komponente, ausgewählt unter einem Produkt, das eine Titanverbindung und ein Magnesiumhalogenid enthält,und einem Produkt, gebildet aus einer 4-wertigen Titanverbindung, welche aufgebracht ist auf einem 3-wertigen Titanhalogenid mit einer spezifischen Oberfläche von höher als 50 $m^2/g$, welches Verfahren die Zugabe zu der Polymerisationsaufschlämmung während der Polymerisation oder am Ende der Polymerisation einer Verbindung umfaßt, die in dem Molekül eine oder mehrere sterisch gehinderte Piperidingruppen enthält, die durch die folgende allgemeine Formel wiedergegeben werden

(I)

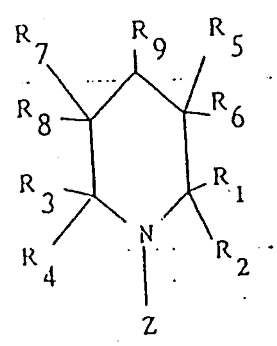

worin

$R_1$, $R_2$ Alkylreste mit 1 bis 4 Kohlenstoffatomen oder 2,2,6,6-Tetramethylpiperidinringe sein können oder gemeinsam mit dem Piperidinkohlenstoffatom, an das sie gebunden sind, eine Cycloalkylgruppe mit 5 bis 10 Kohlenstoffatomen bilden können, $R_3$, $R_4$ = Alkylreste mit 1 bis 18 Kohlenstoffatomen oder sie bilden gemeinsam mit dem Piperidinkohlenstoffatom, an das sie gebunden sind, eine Cycloalkylgruppe mit 5 bis 10 Kohlenstoffatomen,

$R_5$, $R_6$, $R_7$, $R_8$, $R_9$, Z = Wasserstoff oder ein organischer Rest, vorzugsweise ein $C_1$-$C_{18}$-Alkyl-, $C_3$-$C_{12}$-Alkenyl-, $C_7$-$C_{18}$-Aralkylrest, wobei phenolische Verbindungen ausgeschlossen sind.

2. Verfahren gemäß Anspruch 1, worin die in dem Molekül eine oder mehrere sterisch gehinderte

Piperidingruppen enthaltende Verbindung ein oligomeres Produkt ist.

3. Verfahren gemäß Anspruch 1, worin die eine oder mehrere sterisch gehinderte Piperidingruppen enthaltende Verbindung ein monomeres Produkt ist, worin die Piperidinringe gegebenenfalls substituiert und aneinander gebunden sein können.

4. Verfahren gemäß Anspruch 1, worin die sterisch gehinderte Piperidingruppen enthaltende Verbindung zu dem Monomeren oder zu der Mischung der Monomeren zu Beginn oder während der Polymerisation zugegeben wird.

5. Verfahren gemäß Anspruch 1, worin die sterisch gehinderte Piperidingruppen enthaltende Verbindung zu der Polymerenaufschlämmung vor der Abtrennung des nicht umgesetzten Monomeren zugegeben wird.

6. Verfahren gemäß einem der vorhergehenden Ansprüche, worin die sterisch gehinderte Piperidingruppen enthaltende Verbindung in einer Menge im Bereich zwischen 0,01 und 1 Gew.-%, bezogen auf das Polymere, zugegeben wird.

7. Verfahren gemäß Anspruch 1, worin die olefinischen Polymeren mit Hilfe stereospezifischer Katalysatoren erhalten werden, umfassend das Reaktionsprodukt einer Al-Alkylverbindung mit katalytischen Komponenten, welche eine Titanverbindung und eine Elektronendonorverbindung, aufgebracht auf einem Magnesiumhalogenid in aktiver Form, umfassen.